# FASCICULE DE BREVET EUROPEEN

(11) **EP 3 419 827 B1**
(45) Date de publication et mention de la délivrance du brevet: **12.02.2020**
(21) Numéro de dépôt: 17710351.2
(22) Date de dépôt: 23.02.2017
(51) Int. Cl.: B32B 33/00

(54) **ARTICLE COMPRENANT UNE COUCHE DE PROTECTION SUPERIEURE A BASE D'OXYDE MIXTE DE ZIRCONIUM ET D'ALUMINIUM**
ARTIKEL MIT EINER SCHUTZSCHICHT AUF DER BASIS VON MISCHOXID AUS ZIRKONIUM UND ALUMINIUM
ARTICLE COMPRISING A PROTECTIVE TOP LAYER BASED ON MIXED OXIDE OF ZIRCONIUM AND ALUMINUM

(30) Priorité: 23.02.2016 FR 1651466
(43) Date de publication de la demande: 02.01.2019
(73) Titulaire: Saint-Gobain Glass France, 92400 Courbevoie (FR)
(72) Inventeur: HAGEN, Jan, 53123 Bonn (DE); SINGH, Laura Jane, 75009 Paris (FR); BENEDETTO, Alessandro, 75019 Paris (FR); BARRIERES, Frédéric, 93400 Saint-Ouen (FR); LOUIS, Benoît, 93200 Saint-Denis (FR)
(74) Mandataire: Saint-Gobain Recherche
(86) Numéro de dépôt international: PCT/FR2017/050402
(87) Numéro de publication internationale: WO 2017/144822

(56) Documents cités:
- WO-A1-2015/185849
- US-A1- 2014 220 360

## Description

L'invention se rapporte au domaine des couches minces inorganiques, notamment déposées sur des substrats. Le substrat peut être en verre, en polymère, en métal ou en céramique, mais il est avantageusement en verre.

Elle concerne plus particulièrement un article comprenant un substrat recouvert d'une fine couche de protection transparente, en particulier une couche de matériau dur conférant audit substrat une grande résistance à la rayure, un coefficient de friction faible et une stabilité thermique élevée.

L'invention vise également le procédé de fabrication d'un tel article ainsi que son utilisation dans de nombreuses applications, en particulier dans le domaine de la décoration intérieure mais également dans le domaine du vitrage de bâtiments ou dans celui du vitrage de véhicule.

Les surfaces en verre présentent un coefficient de friction élevé et ne sont pas très résistantes aux rayures, à l'exception des surfaces de verre trempé, en particulier de verre trempé chimiquement. Cependant, un tel traitement présente un surcout dans le processus de fabrication. Des alternatives sont donc à envisager.

Les articles destinés à agir sur le rayonnement infrarouge sont utilisés dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule. De tels articles comprennent au moins un substrat revêtu d'un empilement de couches minces agissant sur le rayonnement infrarouge comprenant au moins une couche fonctionnelle. Une couche fonctionnelle est déposée entre au moins deux couches à base de matériaux diélectriques.

La résistance mécanique de ces empilements est souvent insuffisante et cela, a fortiori, lorsque la couche fonctionnelle est une couche métallique à base d'argent (ou couche d'argent). Cette faible résistance se traduit par l'apparition à court terme de défauts tels que des rayures, voire de l'arrachement total ou partiel de l'empilement lors de son utilisation dans des conditions normales. Tous défauts ou rayures sont susceptibles d'altérer non seulement l'esthétique du substrat revêtu mais également ses performances optiques et énergétiques.

Le document US2014/0220360 décrit ainsi un procédé de fabrication d'un article revêtu résistant aux rayures comprenant une étape de traitement thermique. Après ce traitement thermique, l'article revêtu d'une couche d'oxyde et/ou de nitrure de zirconium, dopé avec du cuivre, en particulier de l'oxyde de cuivre, s'avère résistant aux rayures. Cependant, il a été découvert que le revêtement divulgué dans ce document présente une moindre résistance à la rayure sans ce traitement thermique.

Or, pour un certain nombre d'applications, il est utile de pouvoir disposer d'un substrat en verre qui présente une résistance aux rayures optimale sans pour autant qu'il soit nécessaire de lui faire subir un traitement thermique, tel que par exemple une trempe thermique.

Il existe donc un besoin de disposer de revêtements résistants, avec un faible coefficient de friction, qui permettent de protéger en surface des articles trempables, c'est dire destinés ou non à être trempés, vis-à-vis des rayures sans que cette résistance aux rayures soit dépendante d'un quelconque traitement supplémentaire, encore moins d'un traitement thermique, par exemple de type trempe.

Contre toute attente, il s'avère qu'un revêtement d'oxyde mixte de zirconium et d'aluminium permet de protéger efficacement des rayures un article ainsi revêtu et ce, sans que ledit article revêtu, ait nécessairement à subir un quelconque traitement supplémentaire, tel qu'une trempe ou un bombage par exemple, pour augmenter ses propriétés de résistance aux rayures contrairement à l'art antérieur mentionné précédemment.

En outre, un autre avantage de l'oxyde mixte de zirconium et d'aluminium est sa transparence, qualité que ne possède pas l'oxyde de zirconium dopé au cuivre.

L'invention a donc pour objet un article comprenant un substrat notamment transparent, ledit substrat étant recouvert sur au moins une de ses faces, en totalité ou en partie, par une couche de protection, à base d'oxyde mixte de zirconium et d'aluminium. L'article peut, en outre, comprendre un revêtement situé entre la couche de protection à base d'oxyde mixte de zirconium et d'aluminium et ledit substrat. La couche de protection est, de préférence, la couche la plus externe de l'empilement recouvrant ledit substrat, c'est-à-dire la couche la plus éloignée du substrat.

L'invention concerne également un article, tel qu'un vitrage, comprenant un substrat, de préférence transparent, revêtu d'un empilement de couches minces agissant sur le rayonnement infrarouge comprenant au moins une couche fonctionnelle et au moins une couche de protection à base d'oxyde mixte de zirconium et d'aluminium. La couche fonctionnelle peut agir sur le rayonnement solaire et/ou sur le rayonnement infrarouge de grande longueur d'onde.

Les couches fonctionnelles sont déposées entre des revêtements à base de matériaux diélectriques qui comprennent généralement plusieurs couches diélectriques permettant d'ajuster les propriétés optiques de l'empilement.

La couche de protection est déposée au-dessus d'au moins une partie de la couche fonctionnelle. De préférence, la couche de protection est la dernière couche de l'empilement.

L'invention consiste ainsi à prévenir, outre les rayures, la modification des propriétés de l'empilement, notamment optiques et thermiques, au cas où le substrat porteur serait soumis à un traitement thermique du type bombage ou trempe.

L'article selon l'invention, peut être bombé ou non bombé et/ou trempé ou non trempé. On dit alors qu'il est trempable et/ou bombable.

L'invention concerne également un vitrage, en particulier un vitrage de véhicule ou un vitrage de bâtiment, ou entrant dans la composition d'une table, d'un comptoir, d'une plaque de cuisson, d'une paroi de douche, d'une cloison ou d'un radiateur, comprenant un tel article, trempable et/ou bombable.

On entend, au sens de la présente invention, par « trempable », un article qui peut être trempé, ou pas, en vue de sa mise en œuvre. La trempe est une étape facultative qui n'est pas nécessaire à la mise en œuvre de l'article ni à ses propriétés de résistance aux rayures.

On entend, au sens de la présente invention, par « bombable », un article qui peut être bombé, ou pas, en vue de sa mise en œuvre. Le bombage est une étape optionnelle.

Ces vitrages peuvent équiper aussi bien les bâtiments que les véhicules, en vue notamment de diminuer l'effort de climatisation et/ou de réduire une surchauffe excessive entraînée par l'importance toujours croissante des surfaces vitrées dans les pièces et habitacles ou pour des raisons de sécurité.

Enfin, l'invention a trait à un procédé de fabrication d'un tel article, dans lequel ladite couche de protection à base d'oxyde mixte de zirconium et d'aluminium est déposée :
(i) par pulvérisation cathodique magnétron, en particulier par co-pulvérisation d'oxyde de zirconium et d'oxyde d'aluminium ou par pulvérisation réactive à partir d'une cible de zirconium et d'aluminium en présence d'O₂, ou d'une cible mixte d'oxyde de zirconium et d'aluminium, ou
(ii) par dépôt chimique en phase vapeur à partir d'un précurseur à base de zirconium et d'aluminium approprié ou
(iii) par pyrolyse en phase gazeuse sous pression ambiante.

Toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

Le terme « oxyde mixte de zirconium et d'aluminium », couvre, à la fois, aussi bien l'oxyde de zirconium dopé avec l'aluminium, en tant que métal, que l'oxyde d'aluminium dopé avec du zirconium ou que l'oxyde de zirconium dopé avec un matériau comprenant de l'aluminium tels que l'oxyde d'aluminium ou l'alumine ou que l'oxyde d'aluminium ou l'alumine dopé avec de l'oxyde de zirconium. Avantageusement, la couche de protection est à base d'oxyde de zirconium dopé avec de l'oxyde d'aluminium.

L'oxyde mixte de zirconium et d'aluminium peut être pur ou présenter des traces d'autres éléments telles que des traces de titane, d'hafnium ou de silicium. Lorsque des traces sont présentes, elles sont avantageusement <1% en poids par rapport au poids total d'oxyde mixte de zirconium et d'aluminium.

Les proportions atomiques d'aluminium et de zirconium dans la couche de protection par rapport aux proportions de tous les éléments autres que l'oxygène et l'azote présents dans la couche de protection, sont, par ordre de préférence croissant, supérieures à 50 %, supérieures à 60 %, supérieures à 70 %, supérieures à 80 %, supérieures à 90 %, supérieures à 95 %, supérieures à 96 %, supérieures à 97 %, supérieures à 98 %, supérieures à 99 %.

Le rapport atomique Al/Zr dans l'oxyde mixte de zirconium et d'aluminium est par ordre de préférence croissant :
- supérieur à 0,05, supérieur à 0,06, supérieur à 0,08, supérieur à 0,10, supérieur à 0,12, supérieur à 0,14, supérieur à 0,16, supérieur à 0,18, supérieur à 0,20, et/ou
- inférieur à 0,50, inférieur à 0,45, inférieur à 0,42, inférieur à 0,40, inférieur à 0,38, inférieur à 0,36, inférieur à 0,34, inférieur à 0,32, inférieur à 0,30.

Le rapport atomique Al/Zr dans l'oxyde mixte de zirconium et d'aluminium est compris entre 0,05 et 0,5, avantageusement entre 0,1 et 0,4, encore plus avantageusement entre 0,2 et 0,3.

Les proportions massiques d'aluminium et de zirconium dans la couche de protection par rapport aux proportions massiques de tous les éléments autres que l'oxygène et l'azote présents dans la couche de protection, sont, par ordre de préférence croissant, supérieures à 50 %, supérieures à 60 %, supérieures à 70 %, supérieures à 80 %, supérieures à 90 %, supérieures à 95 %, supérieures à 96 %, supérieures à 97 %, supérieures à 98 %, supérieures à 99 %.

Les proportions massiques d'aluminium dans la couche de protection par rapport aux proportions massiques de tous les éléments autres que l'oxygène et l'azote présents dans la couche de protection, sont :
- supérieures à 5 %, supérieures à 10 %, supérieures à 20 %, supérieures à 30 %, supérieures à 40 %, supérieures à 50 %, et/ou
- inférieures à 80 %, inférieures à 60 %, inférieures à 50 %, inférieures à 40 %, inférieures à 30 %, inférieures à 20 %.

Les proportions massiques de zirconium dans la couche de protection par rapport aux proportions massiques de tous les éléments autres que l'oxygène et l'azote présents dans la couche de protection, sont :
- supérieures à 10 %, supérieures à 20 %, supérieures à 40 %, supérieures à 50 %, supérieures à 60 %, supérieures à 70 %, supérieures à 80 %, et/ou
- inférieures à 90 %, inférieures à 80 %, inférieures à 70 %, inférieures à 60 %, inférieures à 50 %.

Le rapport massique Al/Zr dans l'oxyde mixte de zirconium et d'aluminium est par ordre de préférence croissant :
- supérieur à 0,05, supérieur à 0,06, supérieur à 0,08, supérieur à 0,10, supérieur à 0,11, supérieur à 0,12, supérieur à 0,13, supérieur à 0,14, supérieur à 0,15, et/ou
- inférieur à 3,00, inférieur à 2,80, inférieur à 2,60, inférieur à 2,40, inférieur à 2,20, inférieur à 2,00, inférieur à 1,80, inférieur à 1,60, inférieur à 1,5.

Le rapport massique Al/Zr dans l'oxyde mixte de zirconium et d'aluminium est compris entre 0,05 et 3, avantageusement entre 0,1 et 2, encore plus avantageusement entre 0,15 et 1,5.

Les mesures pour le rapport atomique et le rapport massique sont réalisées au microscope électronique à balayage avec la méthode EDX.

L'épaisseur de la couche de protection est, par ordre de préférence croissant :
- inférieure ou égale à 100 nm, inférieure ou égale à 50 nm ou inférieure ou égale à 35 nm, et/ou
- supérieure ou égale à 2 nm, supérieure ou égale à 3 nm ou supérieure ou égale à 5 nm, supérieure ou égale à 10 nm, supérieure ou égale à 15 nm.

L'épaisseur de la couche de protection est, par ordre de préférence croissant, comprise entre 1 et 100 nm, comprise entre 2 et 50 nm, comprise entre 5 et 35 nm.

La couche fonctionnelle est choisie parmi :
- une couche fonctionnelle métallique à base d'argent ou d'un alliage métallique contenant de l'argent,
- une couche fonctionnelle métallique à base de niobium,
- une couche fonctionnelle à base de nitrure de niobium.

Les couches fonctionnelles sont de préférence des couches fonctionnelles métalliques à base d'argent.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

Les couches d'argent sont déposées entre des revêtements à base de matériaux diélectriques qui comprennent généralement plusieurs couches diélectriques permettant d'ajuster les propriétés optiques de l'empilement. Ces couches diélectriques permettent en outre de protéger la couche d'argent des agressions chimiques ou mécaniques. L'empilement de couches minces comprend donc avantageusement au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

Les revêtements à base de matériaux diélectriques présentent une épaisseur supérieure à 15 nm, de préférence comprise entre 15 et 50 nm et mieux de 30 à 40 nm.

Les couches diélectriques des revêtements à base de matériaux diélectriques présentent les caractéristiques suivantes seules ou en combinaison :
- elles sont déposées par pulvérisation cathodique assistée par champ magnétique,
- elles sont choisies parmi les couches diélectriques à fonction barrière ci-après « couche barrière »ou à fonction stabilisante,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence comprise entre 8 et 35 nm.

On entend par couches barrières, une couche en un matériau apte à faire barrière à la diffusion de l'oxygène et de l'eau à haute température, provenant de l'atmosphère ambiante ou du substrat transparent, vers la couche fonctionnelle.

Le matériau constituant la couche intermédiaire barrière est choisi parmi les oxydes, les nitrures, les carbures et leurs mélanges, de préférence, d'au moins un élément choisi dans le groupe comprenant le silicium, l'aluminium, l'étain, le titane, le zirconium, l'hafnium, le niobium, le tantale et le chrome.

Les couches diélectriques à fonction barrière peuvent être à base de composés de silicium et/ou d'aluminium choisis parmi les oxydes tels que SiO2, les nitrures tels que les nitrure de silicium Si3N4 et les nitrures d'aluminium AIN, et les oxynitrures SiOxNy, l'oxycarbure de silicium SiOxCy, le carbure de silicium SiC, éventuellement dopé à l'aide d'au moins un autre élément. Les couches diélectriques à fonction barrière peuvent également être à base à base d'oxyde de zinc et d'étain ou d'oxyde d'étain SnO2, de carbure de chrome CrC, de carbure de tantale TaC, de carbure de titane TiC, de carbure de zirconium ZrC, de nitrure de chrome CrN, de nitrure de tantale TaN, de nitrure de titane TiN et de nitrure de zirconium ZrN.

L'épaisseur de ladite couche barrière est comprise entre 5 et 100 nm, avantageusement entre 10 et 50 nm. L'épaisseur de ladite couche barrière est d'au moins 10 nanomètres et de préférence d'au moins 20 nanomètres.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage. Une couche stabilisante située en dessous d'une couche fonctionnelle est également appelée « couche de mouillage ».

La couche de mouillage peut être en matériau diélectrique (i) choisi parmi les oxydes, les nitrures, les carbures, les oxynitrures, et les oxycarbures d'au moins un élément pris dans le groupe comprenant le silicium, l'aluminium, l'étain, le titane, le zirconium, l'hafnium, le niobium, le tantale, le zinc et le chrome et étant (ii) différent du matériau constituant ladite couche intermédiaire barrière. Le matériau diélectrique constituant ladite couche de mouillage est choisi parmi l'oxyde de titane, l'oxyde de silicium, le nitrure de silicium, l'oxyde de zinc et l'oxyde de zinc et d'étain. L'épaisseur de la couche de mouillage est comprise entre 5 et 100 nm, avantageusement entre 5 et 20 nm, encore plus avantageusement entre 5 et 10 nm.

La couche de protection est de préférence la dernière couche de l'empilement, c'est-à-dire la couche la plus éloignée du substrat revêtu de l'empilement.

Les empilements peuvent comprendre en outre des couches de blocage dont la fonction est de protéger les couches fonctionnelles en évitant une éventuelle dégradation liée au dépôt d'un revêtement à base de matériaux diélectriques ou liée à un traitement thermique. Selon un mode de réalisation, l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées notamment lorsque la couche fonctionnelle est une couche métallique à base d'argent, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,5 nm ou d'au moins 0,8 nm et/ou
- d'au plus 5,0 nm ou d'au plus 2,0 nm.

Un exemple d'empilement convenant selon l'invention comprend :
- un revêtement à base de matériaux diélectriques situé en-dessous de la couche métallique fonctionnelle à base d'argent, le revêtement pouvant comprendre au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement pouvant comprendre au moins une couche diélectrique à base de nitrure de silicium et/ou d'aluminium,
- une couche de protection.

L'article, c'est-à-dire le substrat transparent éventuellement revêtu de l'empilement, n'est pas traité thermiquement, mails il peut être destiné à subir un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. La mise en œuvre ou non d'un traitement thermique sur l'article selon l'invention dépendra de l'application à laquelle l'article est destiné. Les propriétés de l'article selon l'invention, démontrées ici, à savoir la résistance aux rayures, sont indépendantes d'un quelconque traitement thermique.

Enfin, l'invention concerne un vitrage comprenant l'article selon l'invention. Il peut s'agir par exemple d'un vitrage de bâtiment ou de véhicule.

Les substrats selon l'invention peuvent être choisis parmi les substrats :
- en verre, avantageusement silico-sodo-calcique,
- en polymère, avantageusement en polycarbonate, en polyméthacrylate de méthyle, en polyéthylène, en polyéthylène téréphtalate ou en polyéthylène naphtalate ;
- en métal, avantageusement en acier, en aluminium ou en cuivre, ou
- en céramique, avantageusement en carbure de silicium, en nitrure de silicium, en nitrure d'aluminium ou en oxyde d'aluminium.

Les substrats transparents selon l'invention sont de préférence en un matériau rigide minéral, comme en verre, ou organiques à base de polymères (ou en polymère).

Le verre est de préférence de type borosilicate, alumino-borosilicate ou silico-sodo-calcique, mieux encore de type silico-sodo-calcique.

Les substrats transparents organiques selon l'invention peuvent également être en polymère, rigides ou flexibles. Des exemples de polymères convenant selon l'invention comprennent, notamment :
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et - les polythiouréthanes.

De préférence, le substrat est une feuille de verre, de vitrocéramique, ou d'un matériau organique polymérique. Il est de préférence transparent, incolore ou coloré.

Le métal est choisi de préférence parmi l'acier, l'aluminium et le cuivre.

La céramique est choisie de préférence parmi le carbure de silicium, le nitrure de silicium, le nitrure d'aluminium et l'oxyde d'aluminium.

L'épaisseur du substrat varie généralement entre 0,5 mm et 19 mm, de préférence entre 0,7 mm et 9 mm, notamment entre 2 mm et 8 mm, voire entre 4 mm et 6 mm. L'épaisseur du substrat est de préférence inférieure ou égale à 6 mm, voire 4 mm. Le substrat présente avantageusement une dimension d'au moins 50 cm.

Des substrats en matériau organique polymérique peuvent avoir des épaisseurs nettement plus faibles, par exemple comprises entre 25 et 100 µm.

Dans le cas d'un substrat en verre, celui-ci est de préférence du type flotté, c'est-à-dire susceptible d'avoir été obtenu par un procédé consistant à déverser le verre fondu sur un bain d'étain en fusion (bain "float"). Le substrat de verre peut également être obtenu par laminage entre deux rouleaux.

Selon un mode de réalisation, l'article comprend un revêtement situé entre ladite couche de protection et ledit substrat. Le revêtement comprend au moins une couche. Cette ou ces couches ont pour objectif de conférer une fonctionnalité supplémentaire au substrat. Selon ce mode de réalisation, l'article comprend un empilement comprenant le revêtement et au moins une couche de protection selon l'invention.

Le revêtement peut comprendre, en partant du substrat :
(i) au moins une couche intermédiaire barrière,
(ii) éventuellement au moins une couche de mouillage et
(iii) éventuellement au moins un empilement de couches à basse émissivité et/ou un empilement de couches à contrôle solaire.

L'invention concerne également un article comprenant un substrat transparent, notamment en verre, revêtu d'un empilement de couches minces comprenant :
- au moins une couche à propriétés dans l'infra-rouge, notamment bas-émissive, disposée entre (i) une couche sous-jacente de mouillage (qui peut être à base d'oxyde) elle-même disposée sur un premier revêtement à base de matériau diélectrique et (ii) une couche supérieure de blocage, optionnelle, elle-même surmontée d'un second revêtement à base de matériau diélectrique et
- au moins une couche de protection à base d'oxyde mixte de zirconium et d'aluminium et comportant.

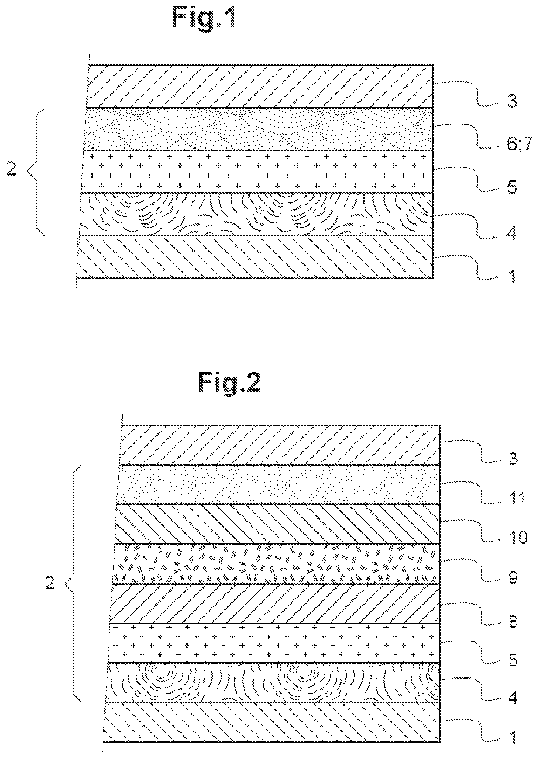

La figure 1 est une vue en coupe transversale d'un mode de réalisation d'un article revêtu selon l'invention. Sur la figure 1, le substrat 1 est surmonté éventuellement d'un revêtement 2 constitué successivement, en partant dudit substrat 1, d'une couche 4 barrière à la diffusion de l'oxygène et des ions, entre autre le Na+, d'une couche de mouillage 5, puis d'un empilement à basse émissivité (6) et/ou d'un empilement à contrôle solaire (7), surmonté d'une couche de protection 3 à base d'oxyde mixte de zirconium et d'aluminium.
La figure 2 est une vue en coupe transversale d'un autre mode de réalisation d'un article revêtu selon l'invention. Sur la figure 2, le substrat 1 est surmonté d'un empilement constituée successivement, et dans l'ordre, (i) d'une couche 4 barrière à la diffusion de l'oxygène et des ions Na+, entre autres, (ii) d'une couche de mouillage 5, (iii) d'une couche fonctionnelle 8 en argent, (iv) d'une couche de blocage 9, encore appelée couche « sacrificielle » puis enfin de nouveau (v) d'une couche à base de matériau diélectrique 10, (vi) d'une couche barrière à l'oxygène 11, (vii) surmontée d'une couche de protection 3 à base d'oxyde mixte de zirconium et d'aluminium.

Ces figures 1 et 2 sont très schématiques, et, pour plus de clarté, ne respectent pas les proportions quant aux épaisseurs des divers matériaux représentés.

Une couche de protection 3, ayant pour but de protéger le substrat 1 des rayures, est déposé sur ledit substrat, au contact direct ou pas de ce dernier. En effet, un revêtement 2 peut éventuellement être disposé sur ledit substrat 1, de manière à se trouver entre ledit substrat 1 et ladite couche de protection 3. Dans ce cas, ladite couche de protection 3 est la couche la plus externe de l'empilement disposé sur ledit substrat, c'est-à-dire la couche la plus éloignée dudit substrat 1.

L'article selon l'invention comprend donc au moins un substrat transparent 1, notamment en verre, au moins une couche de protection 3 et éventuellement un revêtement 2.

Selon la figure 1, ce revêtement 2 comprend, en partant du substrat 1,
(i) au moins une couche intermédiaire barrière 4,
(ii) au moins une couche de mouillage 5 et
(iii) au moins un empilement de couches à basse émissivité 6 et/ou un empilement de couches à contrôle solaire 7.

Selon la figure 2, le revêtement 2 comprend de façon plus détaillée, en partant du substrat 1, outre au moins une couche intermédiaire barrière 4, et au moins une couche de mouillage 5,
(i) au moins une couche fonctionnelle 8, en particulier métallique à propriétés dans l'infrarouge, de préférence à base d'argent,
(ii) éventuellement au moins une couche de blocage 9, appelé également « couche sacrificielle », placée immédiatement au-dessus et au contact de ladite couche fonctionnelle 8 à propriétés dans l'infrarouge,
(iii) au moins une couche 10 de matériau diélectrique non susceptible de modification structurelle importante, notamment d'ordre cristallographique, à haute température, et
(iv) au moins une couche barrière 11, à base de matériau diélectrique, de préférence à base d'un composé comprenant du silicium tel que du nitrure de silicium et le nitrure d'aluminium.

A titre d'illustration, des empilements de couches conformes à l'invention peuvent ainsi être du type :
Verre // Si3N4 ou AIN // ZnO / Ag / Nb // Si3N4 // AlZrO ou
Verre // Si3N4 // ZnO / Ag / Nb // ZnO // Si3N4 // AlZrO ou
Verre // SiO2 ou SiOxCy // ZnO / Ag / Nb // ZnO // Si3N4 ou AIN // AlZrO ou
Verre // SnO2 // ZnO / Ag / Nb // Si3N4 // AlZrO.

L'invention permet ainsi l'obtention d'articles résistants aux rayures, trempables et/ou bombables, bas-émissifs, hautement transparents. Ces propriétés, et surtout la résistance à la rayure, sont maintenues quasiment intactes que l'on soumette ou non les substrats porteurs desdits empilements, après dépôt, à des traitements thermiques du type bombage, recuit ou trempe. On observe églament très peu de modifications colorimétriques, notamment en réflexion.

Il en découle toute une série d'avantages : une seule configuration d'empilement de couches résistant aux rayures pour chaque type de vitrage trempables, c'est à dire aussi bien trempés que non trempés.

On peut aussi assembler indifféremment, sur une façade de bâtiment par exemple, des vitrages trempés et non trempés : l'œil ne pourra pas détecter de disparités de l'aspect optique global de la façade. Il devient également possible de vendre les vitrages revêtus non trempés, en laissant à la discrétion de l'acheteur le soin de les tremper ou non, en pouvant lui garantir une constance dans non seulement leurs propriétés optiques et thermiques mais surtout dans leur résistance aux rayures.

Les articles selon l'invention sont susceptibles d'être traités thermiquement, en particulier par recuit, trempe et/ou bombage. Toutefois, qu'ils soient ou non bombés, recuits ou trempés, ils présentent, grâce à l'invention, une dureté en surface améliorée et constante par rapport à l'art antérieur.

L'article peut être sous forme de vitrage monolithique, de vitrage feuilleté ou d'un vitrage multiple notamment un double-vitrage ou un triple vitrage.

La couche de protection à base d'oxyde mixte de zirconium et d'aluminium peut se trouver sur les faces 1, 2, 3 et/ou 4 pour des vitrages feuilletés comprenant une couche intermédiaire en PVB, située entre la face 2 et 3 dudit vitrage ou sur les faces 1, 2, 3 et/ou 4 d'un vitrage multiple, tel que par exemple un double vitrage comprenant une lame d'air ou de gaz entre la face 2 et 3 dudit vitrage.

L'article selon l'invention trouve des applications particulièrement avantageuses dans la fabrication
(i) de vitrages, notamment de pare-brise dans le domaine de l'automobile ou de fenêtres dans le domaine du bâtiment, de miroirs,
(ii) d'éléments de mobiliers intérieurs, tels que tables, comptoirs, plaques de cuisson, parois de douche, cloisons, radiateurs, et de revêtements muraux, tels que revêtements de façades, entre autres.

Les détails et caractéristiques avantageuses de l'invention vont maintenant ressortir des exemples suivants non limitatifs. Dans tous les exemples, les dépôts successifs de couches minces se font par une technique de pulvérisation cathodique assistée par champ magnétique mais pourraient aussi être réalisés par toute autre technique permettant une bonne maîtrise des épaisseurs de couche obtenues.

Les substrats sur lesquels sont déposés les empilements de couches minces sont des substrats de verre silico-sodo-calcique clair du type Planilux®, commercialisés par SAINT-GOBAIN VITRAGE.

### 1. MESURE DU COEFFICIENT DE FRICTION

Dans les Exemples et les Exemple-comparatifs qui suivent, le coefficient de friction a été mesuré de la façon suivante :
Une bille en acier de 10 mm de diamètre est frottée sur du verre (Exemple-comparatif 1) ou sur une couche de protection préalablement pulvérisée sur du verre, dans les autres cas, avec une charge constante de 0,5N sur une distance de 10 mm, le but étant de frotter la surface du verre ou de la couche sans le ou la dégrader. Le test consiste à faire un certain nombre de cycles d'usure (1 cycle = 1 aller-retour) défini ci-dessous, au même endroit en enregistrant à chaque passage ledit coefficient puis en calculant sa valeur moyenne. Après chaque test, la bille est tournée dans son porte-bille de manière à utiliser une nouvelle surface au contact de la couche lorsque l'échantillon à tester est changé.

### EXEMPLE-COMPARATIF 1

Une plaque de verre silico-sodo-calcique de 2,1mm d'épaisseur est soumis à un ou plusieurs cycles d'usure allant de 2 à 10 cycles permettant de montrer la résistance du verre aux rayures.

### EXEMPLE-COMPARATIF 2

Une couche de protection de TiOx de 20 nm d'épaisseur est déposée par pulvérisation cathodique magnétron sur une plaque de verre identique à celle de l'exemple comparatif 1. Comme précédemment, l'exemple comparatif 2 est soumis à un ou plusieurs cycles d'usure allant de 2 à 10 cycles permettant de montrer la résistance du verre aux rayures.

### EXEMPLE-COMPARATIF 3

Une couche de protection de TiOx de 20 nm d'épaisseur est déposée par pulvérisation cathodique magnétron sur une plaque de verre identique à celle de l'exemple comparatif 1. La plaque de verre ainsi revêtue est ensuite soumise à un traitement thermique à 640°C pendant 10 minutes. Comme précédemment, l'exemple comparatif 3 est soumis à un ou plusieurs cycles d'usure allant de 2 à 10 cycles permettant de montrer la résistance du verre aux rayures.

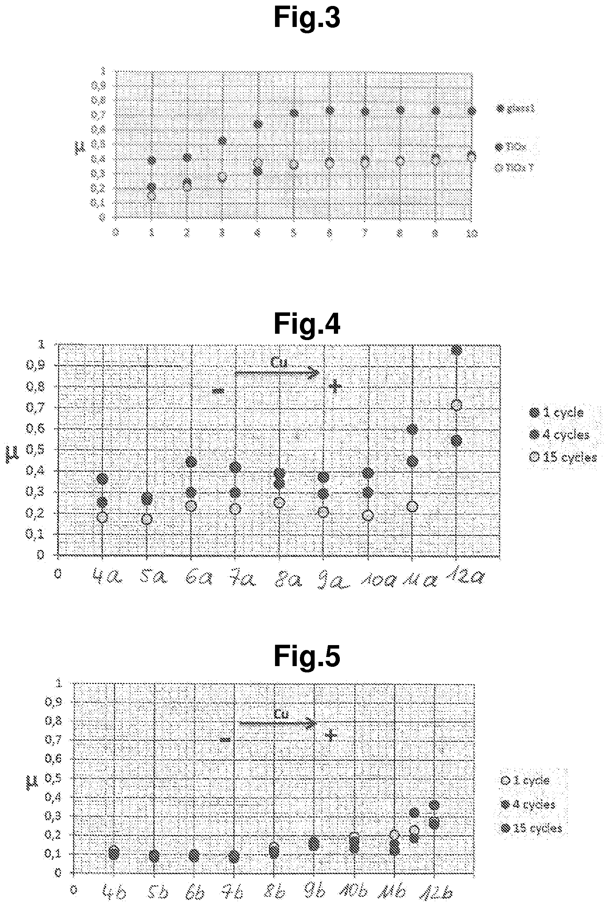

Le coefficient de friction mesuré est reporté pour chaque cas sur la figure 3. La figure 3 représente le coefficient de friction en fonction du nombre de cycles d'usure:
(i) pour le verre nu (voir les points « glass1 » sur le graphique),
(ii) pour une couche de protection de 20 nm de TiOx déposée sur une lame de verre (voir les points « TiOx » sur le graphique) et
(iii) pour une couche de protection de 20 nm de TiOx déposée sur une lame de verre, après traitement thermique (voir les points « TiOx T » sur le graphique).

Le coefficient de friction mesuré pour le verre nu est de 0,7 alors qu'il est d'environ 0,4 pour les Exemples-comparatifs avec une couche de protection à l'oxyde de titane, avant ou après trempe.

### EXEMPLE-COMPARATIFS 4a à 12a

Une couche de protection de 20 nm d'épaisseur de ZrOx : CuO, dont la teneur en Cu et Zr est donnée pour chaque Exemple-comparatif 4a à 12a dans le tableau 1 ci-dessous, est déposée par pulvérisation cathodique magnétron, en particulier par co-pulvérisation d'oxyde de zirconium et d'oxyde de cuivre sur une plaque de verre identique à celle de l'exemple comparatif 1.

### EXEMPLE-COMPARATIFS 4b à 12b

Comme pour les exemples-Comparatifs 4a à 12a, une couche de protection de 20 nm d'épaisseur de ZrOx : CuO, dont la teneur en Cu et Zr est donnée pour chaque Exemple-comparatif 4b à 12b dans le tableau 1 ci-dessous, est déposée par pulvérisation cathodique magnétron, en particulier par co-pulvérisation d'oxyde de zirconium et d'oxyde de cuivre sur une plaque de verre identique à celle de l'exemple comparatif 1. Les plaques ainsi revêtues sont ensuite soumises à un traitement thermique à 640°C pendant 10 minutes.

Le tableau 1 ci-dessous donne outre les % en poids de Cu et Zr mais aussi le rapport résultant, en poids, de Cu/Zr de chaque Exemple-comparatif 4a à 12a, n'ayant pas subi de traitement thermique, et de chaque Exemple-comparatif 4b à 12b, ayant subi un traitement thermique.

**Tableau 1 : * % en poids par rapport au poids total de Cu et de Zr**

| Ex-Cp | 4 a ou b | 5 a ou b | 6 a ou b | 7 a ou b | 8 a ou b | 9 a ou b | 10 a ou b | 11 a ou b | 12 a ou b |
|---|---|---|---|---|---|---|---|---|---|
| %Cu* | 3,1 | 3,8 | 4,8 | 5,4 | 7,3 | 8,6 | 11,9 | 13,8 | 15,8 |
| %Zr* | 96,9 | 96,2 | 95,2 | 94,6 | 92,7 | 91,4 | 88,1 | 86.2 | 84,2 |
| Cu/Zr | 0,03 | 0,04 | 0,05 | 0,06 | 0,08 | 0,09 | 0,14 | 0,16 | 0,19 |

Les Exemple-comparatifs 4a à 12a et 4b à 12b sont ensuite soumis à un, 4 ou 15 cycles d'usure. Les résultats sont regroupés sur les graphiques des figures 4 (sans traitement thermique) et 5 (après traitement thermique).

La figure 4 représente le coefficient de friction pour une couche de protection de ZrOx : CuO d'Exemple-comparatifs 4a à 12a, déposée sur des lames de verre, lesdites lames de verre ainsi revêtues ayant subi des cycles d'usure au nombre de 1, 4 ou 15. La composition de l'Exemple-comparatif 4a contenant la plus faible teneur en Cu et la composition de l'Exemple-comparatif 12a contenant la plus forte teneur en Cu des Exemple-comparatifs 4a à 12a.

La figure 5 représente le coefficient de friction pour une couche de protection de ZrOx : CuO d'Exemple-comparatifs 4b à 12b, déposée sur des lames de verre, lesdites lames de verre ainsi revêtues ayant subi un traitement thermique avant de subir des cycles d'usure au nombre de 1, 4 ou 15. La composition de l'Exemple-comparatif 4b contenant la plus faible teneur en Cu et la composition de l'Exemple-comparatif 12b contenant la plus forte teneur en Cu des Exemple-comparatifs 4b à 12b.

Sur les figures 4 et 5, la flèche allant du « - » vers le « + » indique que la teneur en Cu, dans la couche de protection des exemples comparatifs mentionnés, augmente dans le sens indiqué par la flèche.

Pour la figure 4 : On constate que le dopage en Cu du ZrOx n'influence pas le coefficient de friction jusqu'à l'Exemple-comparatif 10a (fort dopage en Cu). Alors que pour les Exemples-comparatifs qui suivent, le dopage est très influent et le coefficient de friction augmente très nettement pour dépasser 0,7.

Pour la figure 5 : Les coefficients de friction pour les couches de ZrOx : Cu trempé sont plus faibles. Jusqu'à l'exemple-comparatif 8b, il n'y a pas d'influence du dopage cuivre sur le coefficient de fiction : ce dernier est constant à 0,1 même après 15 cycles d'usure. Par contre, pour les Exemples-comparatifs qui suivent, le dopage en cuivre influence les valeurs de coefficient de friction et on constate une remontée régulière qui atteint 0,35 pour l'exemple-comparatif 12b (celui le plus fortement dopé).

### EXEMPLES 13a à 21a selon l'invention

Une couche de protection de 20 nm d'épaisseur de ZrOx : AlOx, dont la teneur en Al et Zr est donnée pour chaque Exemple 13a à 21a dans le tableau 2 ci-dessous, est déposée par pulvérisation cathodique magnétron, en particulier par co-pulvérisation d'oxyde de zirconium et d'oxyde d'aluminium sur une plaque de verre identique à celle de l'exemple comparatif 1.

La couche de protection à base d'oxyde mixte de zirconium et d'aluminium ne comprend pas d'éléments autres que de l'azote et de l'oxygène.

### EXEMPLES 13b à 21b selon l'invention

Comme pour les Exemples 13a à 21a, une couche de protection de 20 nm d'épaisseur de ZrOx : AlOx est déposée par pulvérisation cathodique magnétron, en particulier par co-pulvérisation d'oxyde de zirconium et d'oxyde d'aluminium sur une plaque de verre identique à celle de l'exemple comparatif 1. Les plaques ainsi revêtues sont ensuite soumises à un traitement thermique à 640°C pendant 10 minutes.

Le tableau 2 ci-dessous donne :
- les % en poids d'AI et Zr par rapport au poids total d'AI et de Zr dans l'oxyde mixte de Zr et d'AI, et
- le rapport en poids Al/Zr résultant, pour chaque Exemple 13a à 21a, n'ayant pas subi de traitement thermique, et pour chaque Exemple 13b à 21b, ayant subi un traitement thermique.

Les mesures sont réalisées au microscope électronique à balayage avec la méthode EDX.

**Tableau 2 : ** % en poids par rapport au poids total de Zr et Al.**

| Ex | 13 a ou b | 14 a ou b | 15 a ou b | 16 a ou b | 17 a ou b | 18 a ou b | 19 a ou b | 20 a ou b | 21 a ou b |
|---|---|---|---|---|---|---|---|---|---|
| %Al** | 17,2 | 21,8 | 32,3 | 36,3 | 43,2 | 43,6 | 47,2 | 50 | 53,4 |
| %Zr** | 82,8 | 78,2 | 67,7 | 63,7 | 56,8 | 56,4 | 52,8 | 50 | 46,6 |
| Al/Zr | 0,21 | 0,28 | 0,48 | 0,57 | 0,76 | 0,77 | 0,89 | 1 | 1,15 |

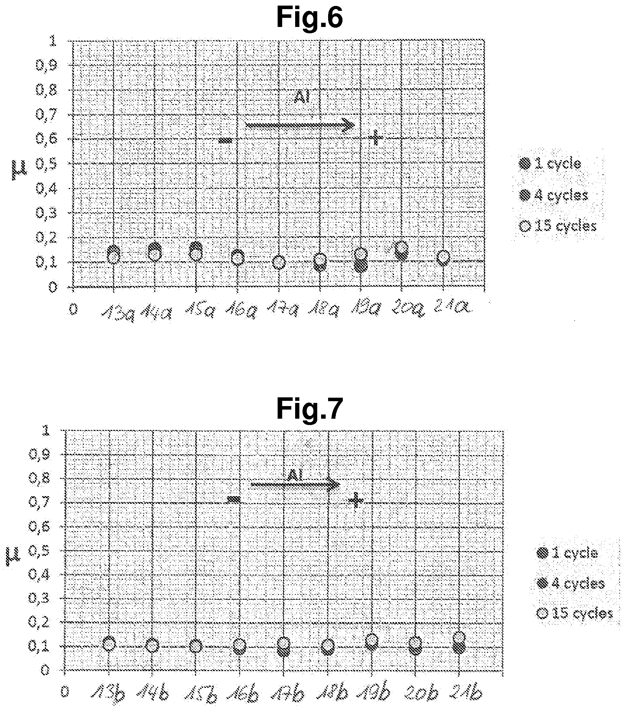

Les Exemples 13a à 21a et 13b à 21b sont ensuite soumis à un, 4 ou 15 cycles d'usure. Les résultats sont regroupés sur les graphiques des figures 6 (sans traitement thermique) et 7 (après traitement thermique).

La figure 6 représente le coefficient de friction pour une couche de protection de ZrOx : AlOx d'Exemples 13a à 21a, selon l'invention, déposée sur des lames de verre, lesdites lames de verre ainsi revêtues ayant subi des cycles d'usure au nombre de 1, 4 ou 15. La composition de l'Exemple 13a contenant la plus faible teneur en Al et la composition de l'Exemple 21a contenant la plus forte teneur en Al des Exemples 13a à 21a.

La figure 7 représente le coefficient de friction pour une couche de protection de ZrOx : AlOx d'Exemples 13b à 21b, selon l'invention, déposée sur des lames de verre, lesdites lames de verre ainsi revêtues ayant subi un traitement thermique avant de subir des cycles d'usure au nombre de 1, 4 ou 15. La composition de l'Exemple 13b contenant la plus faible teneur en Al et la composition de l'Exemple 21b contenant la plus forte teneur en Al des Exemples 13b à 21b.

Respectivement, sur les figures 6 et 7, la flèche allant du « - » vers le « + » indique que la teneur en Al, dans la couche de protection des exemples mentionnés, augmente dans le sens indiqué par la flèche.

Pour la figure 6 : On constate que le dopage en Al n'influence pas le coefficient de frottement qui reste stable et faible à 0,15.

Pour la figure 7 : le coefficient de frottement est un peu plus faible encore et voisin de 0,1.

Dans le cadre de l'invention, nous observons un coefficient de friction bas de l'ordre de 0,1 à 0,15, non influencé par le taux de dopage en Al dans l'oxyde mixte de Zr et Al, qu'un traitement thermique soit ou non appliqué (voir figures 7 et 6), contrairement au cas du ZrOx :Cu (voir figures 4 et 5) et en tous les cas bien inférieur au coefficient de friction mesurés pour le verre nu ou pour les Exemples-comparatifs avec une couche de protection à l'oxyde de titane, avant ou après trempe (voir figure 3).

### 2. MESURE DE LA CHARGE CRITIQUE D'ENDOMMAGEMENT

Dans les Exemples et les Exemple-comparatifs qui suivent, la charge critique d'endommagement Lc a été mesurée de la façon suivante. Une bille en acier de 1 mm de diamètre est frottée sur du verre (Exemple-comparatif 1) ou sur une couche de protection préalablement pulvérisée sur du verre, dans les autres cas, avec une charge croissante augmentant de 0,03N et 30N à une vitesse de chargement de 15 N/minutes sur une longueur de rayures de 10 mm et à une vitesse de déplacement de 5 mm/minutes. Entre chaque rayure, la bille est tournée de manière à renouveler la zone de contact. A chaque fois, cinq rayures ont été réalisées pour déterminer une valeur moyenne de charge critique Lc. La charge critique Lc correspond à la charge à laquelle la couche de protection cède.

| **Exemples** | **Lc (N)** |
|---|---|
| Ex.- comp.1 | 11,5 |
| Ex. 13a à 21a | > 30 |
| Ex. 13b à 21b | > 30 |
| Ex.- comp. 5a | 25 |
| Ex.- comp. 11a | 6 |
| Ex.- comp. 6b | 27 |
| Ex.- comp. 10b | 11 |
| Ex.- comp.2 | 5 |
| Ex.- comp.3 | 9 |

La charge critique Lc est de 11,5 ± 3,2N pour le verre nu (exemple-comparatif 1).

La charge critique Lc est supérieure à 30N, ce qui est extrêmement élevé, pour tous les exemples selon l'invention (exemples 13a à 21a et 13b à 21b), quel que soit le taux d'AI dans l'oxyde mixte de Zr et Al, et qu'ils aient ou non subi une trempe. En outre, on constate une absence de fissuration pour tous les tests réalisés sur les échantillons.

Elle est supérieure à la charge critique des exemples-comparatifs avec une couche de ZrOx :Cu ayant subi une trempe (exemples-comparatif 4b à 12b) ou n'ayant pas subi de trempe (exemple-comparatif 4a à 12a). De façon générale, la Lc baisse lorsque le dopage en Cu dans le ZrOx augmente. Elle passe ainsi de 25N pour l'exemple-comparatif 5a pour arriver à 6N pour l'exemple-comparatif 11a et elle passe de 27N pour l'exemple-comparatif 6b pour arriver à 11N pour l'exemple-comparatif 10b.

Dans le cas des exemple-comparatifs avec une couche de TiOx n'ayant pas subi de traitement thermique (Exemple-comparatif 2), la charge critique Lc observée est de seulement 5N alors qu'elle est de 9N dans le cas des exemple-comparatifs avec une couche de TiOx ayant subi un traitement thermique (Exemple-comparatif 3). Dans ce cas, on observe un effet d'augmentation de la Lc par la trempe.

En conclusion, on observe que la couche de protection à base d'oxyde mixte de zirconium et d'aluminium selon l'invention est le plus performant. En effet, on obtient une charge critique d'endommagement Lc supérieure à 30N et un coefficient de frottement faible de 0,15 pour la couche de protection n'ayant pas subi de trempe et de 0,1 pour la couche de protection après trempe, et ce quel que soit le taux d'aluminium dans l'oxyde mixte de zirconium et d'aluminium.

## Revendications

1. Article comprenant un substrat, notamment transparent, ledit substrat étant recouvert sur au moins une de ses faces, en totalité ou en partie, par une couche de protection à base d'oxyde mixte de zirconium et d'aluminium.

2. Article selon la revendication 1, **caractérisée en ce que** la couche de protection à base d'oxyde mixte de zirconium et d'aluminium est la couche la plus éloignée du substrat.

3. Article selon l'une quelconque des revendications précédentes **caractérisé en ce que** le rapport atomique Al/Zr dans l'oxyde mixte de zirconium et d'aluminium est compris entre 0,05 et 0,5, avantageusement entre 0,1 et 0,4, encore plus avantageusement entre 0,2 et 0,3.

4. Article selon l'une quelconque des revendications précédentes **caractérisé en ce que** les proportions atomiques d'aluminium et de zirconium dans la couche de protection par rapport aux proportions de tous les éléments autres que de l'oxygène et de l'azote sont supérieures à 50 %.

5. Article selon l'une quelconque des revendications précédentes **caractérisé en ce que** les proportions massiques d'aluminium dans la couche de protection par rapport aux proportions massiques de tous les éléments autres que l'oxygène et l'azote présents dans la couche de protection, sont supérieures à 10 % et inférieures à 60 %.

6. Article selon l'une quelconque des revendications précédentes **caractérisé en ce que** les proportions massiques de zirconium dans la couche de protection par rapport aux proportions massiques de tous les éléments autres que l'oxygène et l'azote présents dans la couche de protection, sont supérieures à 40 % et inférieures à 90 %.

7. Article selon l'une quelconque des revendications précédentes **caractérisé en ce que** l'épaisseur de la couche de protection est comprise entre 1 et 100 nm.

8. Article selon l'une quelconque des revendications précédentes **caractérisé en ce qu'**il comprend un revêtement situé entre ladite couche de protection et ledit substrat.

9. Article selon l'une quelconque des revendications précédentes **caractérisé en ce que** le substrat est revêtu d'un empilement de couches minces comprenant au moins une couche fonctionnelle, de préférence, métallique et au moins une couche de protection à base d'oxyde mixte de zirconium et d'aluminium.

10. Article selon la revendication précédente **caractérisé en ce que** la couche de protection à base d'oxyde mixte de zirconium et d'aluminium est située au-dessus de la couche fonctionnelle.

11. Article selon l'une quelconque des revendications 9 ou 10 **caractérisé en ce que** l'empilement de couches minces comprend au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

12. Article selon l'une quelconque des revendications précédentes tel que le substrat transparent est :
- en verre, notamment silico-sodo-calcique ou
- en polymère notamment en polycarbonate, en polyméthacrylate de méthyle, en polyéthylène, en polyéthylène téréphtalate ou en polyéthylène naphtalate.

13. Article selon l'une quelconque des revendications précédentes **caractérisé en ce qu'**il est traité thermiquement, en particulier par recuit, trempe et/ou bombage.

14. Vitrage, en particulier un vitrage de véhicule ou un vitrage de bâtiment ou entrant dans la composition d'une table, d'un comptoir, d'une plaque de cuisson, d'une paroi de douche, d'une cloison ou d'un radiateur, **caractérisé en ce qu'**il comprend un article selon l'une quelconque des revendications précédentes.

15. Procédé de fabrication d'un article selon l'une quelconque des revendications 1 à 14 dans lequel ladite couche de protection à base d'oxyde mixte de zirconium et d'aluminium est déposée :
(i) par pulvérisation cathodique magnétron, en particulier par co-pulvérisation d'oxyde de zirconium et d'oxyde d'aluminium ou par pulvérisation réactive à partir d'une cible de zirconium et d'aluminium en présence d'O2, ou d'une cible mixte d'oxyde de zirconium et d'aluminium, ou
(ii) par dépôt chimique en phase vapeur à partir d'un précurseur à base de zirconium et d'aluminium approprié, ou
(iii) par pyrolyse en phase gazeuse sous pression ambiante.

## Patentansprüche

1. Artikel, umfassend ein insbesondere transparentes Substrat, wobei das Substrat auf mindestens einer seiner Seiten ganz oder teilweise von einer Schutzschicht auf der Basis von Mischoxid aus Zirkonium und Aluminium bedeckt ist.

2. Artikel nach Anspruch 1, **dadurch gekennzeichnet, dass** die Schutzschicht auf der Basis von Mischoxid aus Zirkonium und Aluminium die vom Substrat am weitesten entfernte Schicht ist.

3. Artikel nach einem der vorhergehenden Ansprüche, **dadurch gekennzeichnet, dass** das Atomverhältnis Al/Zr in dem Mischoxid aus Zirkonium und Aluminium zwischen 0,05 und 0,5, in vorteilhafter Weise zwischen 0,1 und 0,4, noch vorteilhafter zwischen 0,2 und 0,3 liegt.

4. Artikel nach einem der vorhergehenden Ansprüche, **dadurch gekennzeichnet, dass** die Atomanteile von Aluminium und Zirkonium in der Schutzschicht in Bezug auf die Anteile aller anderen Elemente als Sauerstoff und Stickstoff höher als 50 % sind.

5. Artikel nach einem der vorhergehenden Ansprüche, **dadurch gekennzeichnet, dass** die Massenanteile von Aluminium in der Schutzschicht in Bezug auf die Massenanteile aller anderen Elemente als Sauerstoff und Stickstoff, die in der Schutzschicht vorhanden sind, höher als 10 % und niedriger als 60 % sind.

6. Artikel nach einem der vorhergehenden Ansprüche, **dadurch gekennzeichnet, dass** die Massenanteile von Zirkonium in der Schutzschicht in Bezug auf die Massenanteile aller anderen Elemente als Sauerstoff und Stickstoff, die in der Schutzschicht vorhanden sind, höher als 40 % und niedriger als 90 % sind.

7. Artikel nach einem der vorhergehenden Ansprüche, **dadurch gekennzeichnet, dass** die Dicke der Schutzschicht zwischen 1 und 100 nm liegt.

8. Artikel nach einem der vorhergehenden Ansprüche, **dadurch gekennzeichnet, dass** er eine Beschichtung umfasst, die sich zwischen der Schutzschicht und dem Substrat befindet.

9. Artikel nach einem der vorhergehenden Ansprüche, **dadurch gekennzeichnet, dass** das Substrat mit einem Stapel dünner Schichten beschichtet ist, der mindestens eine vorzugsweise metallische Funktionsschicht und mindestens eine Schutzschicht auf der Basis von Mischoxid aus Zirkonium und Aluminium umfasst.

10. Artikel nach dem vorhergehenden Anspruch, **dadurch gekennzeichnet, dass** sich die Schutzschicht auf der Basis von Mischoxid aus Zirkonium und Aluminium oberhalb der Funktionsschicht befindet.

11. Artikel nach einem der Ansprüche 9 oder 10, **dadurch gekennzeichnet, dass** der Stapel dünner Schichten mindestens eine metallische Funktionsschicht auf der Basis von Silber, mindestens zwei Beschichtungen auf der Basis von dielektrischen Materialien umfasst, wobei jede Beschichtung mindestens eine dielektrische Schicht aufweist, sodass jede metallische Funktionsschicht zwischen zwei Beschichtungen auf der Basis von dielektrischen Materialien angeordnet ist.

12. Artikel nach einem der vorhergehenden Ansprüche, wobei das transparente Substrat ist:
- aus Glas, insbesondere Kalk-Natron-Silikatglas, oder
- aus Polymer, insbesondere aus Polycarbonat, aus Polymethylmethacrylat, aus Polyethylen, aus Polyethylenterephthalat oder aus Polyethylennaphthalat.

13. Artikel nach einem der vorhergehenden Ansprüche, **dadurch gekennzeichnet, dass** er wärmebehandelt ist, insbesondere durch Tempern, Abschrecken und/oder Biegen.

14. Verglasung, insbesondere eine Fahrzeugverglasung oder Gebäudeverglasung oder als Teil eines Tisches, einer Arbeitsplatte, eines Kochfeldes, einer Duschwand, einer Trennwand oder eines Heizkörpers, **dadurch gekennzeichnet, dass** sie einen Artikel nach einem der vorhergehenden Ansprüche umfasst.

15. Verfahren zur Herstellung eines Artikels nach einem der Ansprüche 1 bis 14, wobei die Schutzschicht auf der Basis von Mischoxid aus Zirkonium und Aluminium abgeschieden wird:
(i) durch Magnetronkathodenzerstäubung, insbesondere durch gemeinsames Aufsprühen von Zirkoniumoxid und Aluminiumoxid oder durch reaktives Zerstäuben eines Targets aus Zirkonium und Aluminium in Gegenwart von O2 oder eines gemischten Targets aus Zirkonium- und Aluminiumoxid, oder
(ii) durch chemische Gasphasenabscheidung aus einem geeigneten Zirkonium-und Aluminiumvorläufer, oder
(iii) durch Pyrolyse in der Gasphase unter Umgebungsdruck.

## Claims

1. An article comprising a substrate that is especially transparent, said substrate being covered on at least one of its faces, totally or partly, with a protective layer based on zirconium and aluminum mixed oxide.

2. The article as claimed in claim 1, **characterized in that** the protective layer based on zirconium and aluminum mixed oxide is the layer that is the most remote from the substrate.

3. The article as claimed in either of the preceding claims, **characterized in that** the Al/Zr atomic ratio in the zirconium and aluminum mixed oxide is between 0.05 and 0.5, advantageously between 0.1 and 0.4, even more advantageously between 0.2 and 0.3.

4. The article as claimed in any one of the preceding claims, **characterized in that** the atomic proportions of aluminum and zirconium in the protective layer relative to the proportions of all the elements other than oxygen and nitrogen are greater than 50%.

5. The article as claimed in any one of the preceding claims, **characterized in that** the mass proportions of aluminum in the protective layer relative to the mass proportions of all the elements other than oxygen and nitrogen present in the protective layer are greater than 10% and less than 60%.

6. The article as claimed in any one of the preceding claims, **characterized in that** the mass proportions of zirconium in the protective layer relative to the mass proportions of all the elements other than oxygen and nitrogen present in the protective layer are greater than 40% and less than 90%.

7. The article as claimed in any one of the preceding claims, **characterized in that** the thickness of the protective layer is between 1 and 100 nm.

8. The article as claimed in any one of the preceding claims, **characterized in that** it comprises a coating located between said protective layer and said substrate.

9. The article as claimed in any one of the preceding claims, **characterized in that** the substrate is coated with a stack of thin layers comprising at least one functional layer, which is preferably metallic, and at least one protective layer based on zirconium and aluminum mixed oxide.

10. The article as claimed in the preceding claim, **characterized in that** the protective layer based on zirconium and aluminum mixed oxide is located over the functional layer.

11. The article as claimed in either of claims 9 and 10, **characterized in that** the stack of thin layers comprises at least one silver-based functional metal layer, at least two coatings based on dielectric materials, each coating comprising at least one dielectric layer, such that each functional metal layer is arranged between two coatings based on dielectric materials.

12. The article as claimed in any one of the preceding claims, such that the transparent substrate is:
- made of glass, especially of silico-sodic-calcium glass, or
- made of polymer, especially of polycarbonate, polymethyl methacrylate, polyethylene, polyethylene terephthalate or polyethylene naphthalate.

13. The article as claimed in any one of the preceding claims, **characterized in that** it is heat treated, in particular by annealing, toughening and/or bending.

14. A glazing, in particular glazing for a vehicle or glazing for a building, or glazing included in the composition of a table, a counter, a cooking hob, a shower wall, a partition or a radiator, **characterized in that** it comprises an article as claimed in any one of the preceding claims.

15. A process for manufacturing an article as claimed in any one of claims 1 to 14, in which said protective layer based on zirconium and aluminum mixed oxide is deposited:
(i) by magnetron cathode sputtering, in particular by co-sputtering of zirconium oxide and aluminum oxide or by reactive sputtering using a target of zirconium and aluminum in the presence of O2, or a mixed target of zirconium and aluminum oxide, or
(ii) by chemical vapor deposition using a suitable precursor based on zirconium and aluminum, or
(iii) by gas-phase pyrolysis under ambient pressure.
